# FASCICULE DE BREVET EUROPEEN

(11) **EP 1 442 963 B1**
(45) Date de publication et mention de la délivrance du brevet: **30.04.2008**
(21) Numéro de dépôt: 04290267.6
(22) Date de dépôt: 02.02.2004
(51) Int. Cl.: B62D 21/15, B60R 21/34

(54) **Fixation à un longeron d'une pièce de structure d'un avant de véhicule automobile**
Befestigung eines Strukturteils an einem Längsträger im Vorbau eines Kraftfahrzeuges
Fixing of a structural member on a support beam in the front end of a motor vehicle

(30) Priorité: 03.02.2003 FR 0301202
(43) Date de publication de la demande: 04.08.2004
(73) Titulaire: COMPAGNIE PLASTIC OMNIUM, 69007 Lyon (FR)
(72) Inventeur: Andre, Gérald, 01500 Amberieu en Bugey (FR); Cheron, Hugues, 01800 Meximieux (FR)
(74) Mandataire: de la Bigne, Guillaume Michel Marie

(56) Documents cités:
- EP-A- 1 118 530

## Description

La présente invention concerne une fixation à un longeron d'une pièce de structure d'un avant de véhicule automobile.

La traverse supérieure d'une cassette de refroidissement ou d'une face avant technique est généralement implantée de telle sorte qu'elle présente un point dur pour un choc avec une tête ou une hanche d'un piéton.

Cette rigidité rend une telle traverse supérieure dangereuse pour les piétons lors d'un choc tête ou hanche car aucune course d'absorption n'est permise. La traverse est au contraire dimensionnée pour supporter jusqu'à 3000 Newtons d'effort sur toute la largeur du véhicule. Ainsi, la traverse participe directement à la rigidité de la structure du véhicule.

Un des buts de la présente invention est de proposer un remède au danger que représente pour des piétons une traverse supérieure et, plus généralement, le bord supérieur rigide de toute pièce de structure d'un avant de véhicule automobile.

La présente invention a pour objet une fixation à un longeron d'une pièce de structure d'un avant de véhicule automobile ayant un bord supérieur rigide situé dans le voisinage d'une zone de la carrosserie susceptible de recevoir l'impact d'une tête ou d'une hanche de piéton. Cette fixation est caractérisée en ce qu'elle comprend des moyens de reprise par le longeron des efforts verticaux subis par la pièce et en ce que ces moyens sont effaçables.

On entend par effaçable le fait que les moyens peuvent s'escamoter, se désactiver ou se détruire, le résultat étant dans chaque cas que la reprise des efforts verticaux n'est plus assurée.

Grâce à l'invention, un choc piéton au voisinage du bord supérieur rigide de la pièce provoque soit une descente de la pièce si celle-ci, après avoir été libérée verticalement par rapport au longeron, n'est fixée en aucun autre point du véhicule, soit une flexion et/ou une rupture de la pièce et de ses autres points de fixation sur le véhicule.

En particulier, que ce soit par descente ou par flexion, il est avantageux que la pièce n'oppose pas de point dur sur une hauteur de 50mm en dessous de l'avant du capot, afin de ne pas perturber l'absorption de l'énergie de la tête ou de la hanche du piéton par le capot. La publication EP-A-1 118 530 divulgue un ensemble d'après le préambule de la revendication 1.

L'invention présente d'autres caractéristiques avantageuses qui peuvent être considérées isolément ou en combinaison :
- les moyens de reprise sont constitués par un doigt monté sur chaque longeron, mobile sous l'action d'un actionneur entre une position sortie dans laquelle il retient la pièce verticalement et une position rentrée dans laquelle il la libère ;
- l'actionneur est un moteur ;
- l'actionneur est relié à un capteur d'impact, de préférence apte à différencier entre un contact avec un piéton et un contact avec un obstacle différent d'un piéton ;
- les moyens de reprise sont constitués par un doigt fixe sécable à partir d'un seuil prédéterminé d'effort vertical subi par la pièce, de préférence entre 3000 et 4000 N afin que la pièce s'efface après un premier pic d'effort d'un choc tête ou hanche ;
- les moyens de reprise comprennent une portion fusible de la pièce ;
- les moyens de reprise sont constitués par un insert noyé dans la pièce et fixé au longeron, cet insert étant configuré pour fendre la pièce au-delà d'un seuil prédéterminé d'effort vertical subi par ladite pièce ;
- la pièce porte une serrure de capot électrique qui est commandée en ouverture par un capteur ayant détecté un contact avec un piéton ;
- les extrémités de la pièce se trouvent en dessous de doublures d'ailes du véhicule et y sont solidarisées par des liaisons fusibles par exemple des inserts surmoulés ou sertis ;
- la pièce est une cassette de refroidissement ;
- la pièce est une face avant technique.

Pour faciliter la compréhension de l'invention, on va maintenant en décrire deux exemples de réalisation, à l'aide des dessins annexés dans lesquels :
- la figure 1 montre une extrémité du longeron portant une poutre de chocs ;
- la figure 2 est analogue à la figure 1 après montage d'une face avant technique sur le longeron ;
- la figure 3 montre les mêmes pièces vues du dessus ;
- la figure 4 est une vue de détail, localisée en IV sur la figure 2, d'un autre exemple de réalisation.

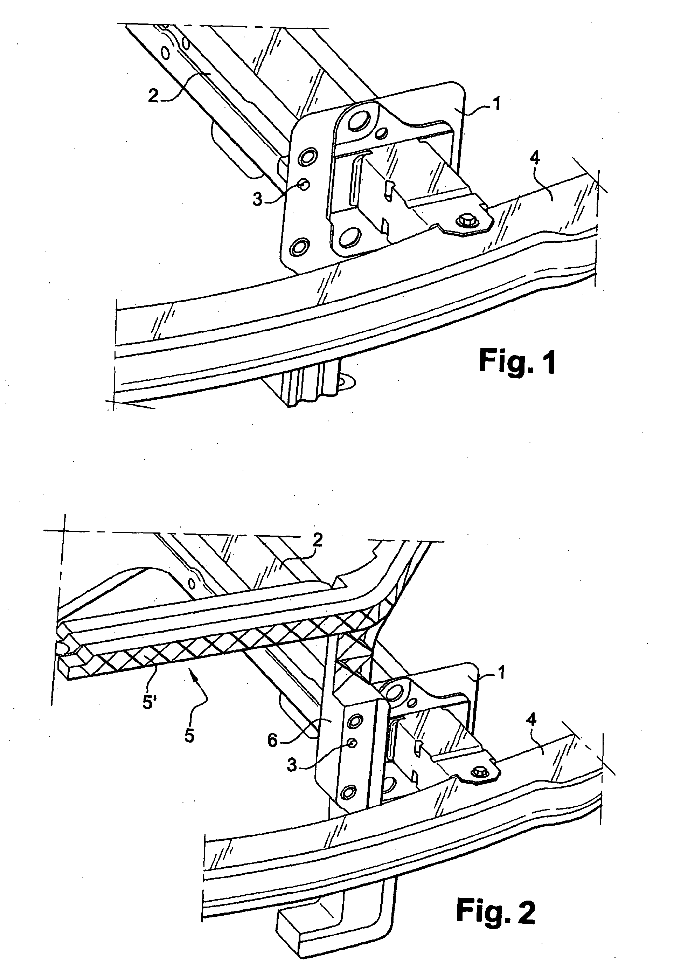

On a représenté sur la figure 1 une platine de fixation 1 en bout d'un longeron 2. La platine de fixation 1 porte un doigt mobile motorisé 3 qui fait saillie sur la face avant ladite platine.

De manière connue, la platine de fixation 1 supporte aussi une poutre de chocs 4.

Sur la figure 2, on voit une face avant technique 5 qui comporte une traverse supérieure horizontale 5' et deux jambages verticaux 6 (dont un seul est visible sur la figure), les jambages étant destinés à venir s'appliquer sur les platines.

La face avant technique 5 forme une pièce de structure de l'avant du véhicule, destinée à reprendre les efforts engendrés par un capot et par les vibrations du véhicule.

Les fixations de la face avant technique 5 sur le véhicule sont conçues de sorte qu'elles puissent reprendre les efforts et les couples selon tous les axes sauf l'axe vertical. Les efforts verticaux sont intégralement repris, en configuration normale, par les doigts mobiles 3 sur les deux longerons 2.

Par ailleurs, un capteur (non représenté) apte à différencier un contact avec une jambe d'un contact avec un autre type d'obstacle fournit une information de détection et déclenche le moteur de chaque doigt 3 en cas de détection d'un piéton. Le moteur joue le rôle d'un actionneur pour le doigt.

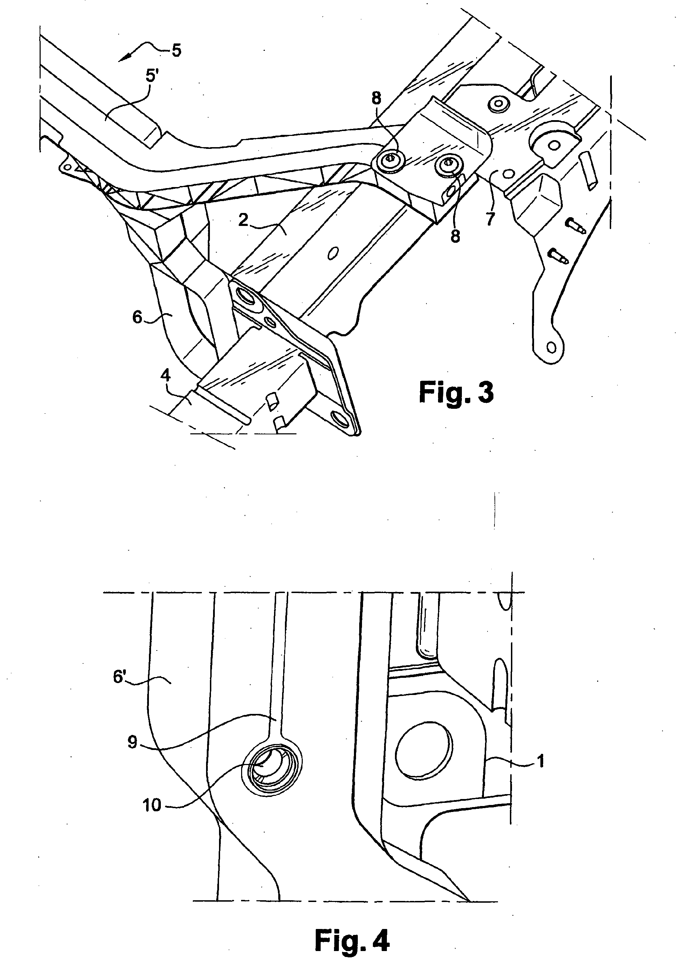

Lorsque le moteur est actionné, le doigt 3 se retire et vient à affleurement de la face avant de la platine de fixation, libérant le jambage 6 de la face avant technique 5 selon la direction verticale. La face avant technique 5 peut ainsi soit descendre par rapport au longeron, si elle n'est fixée en aucun autre point du véhicule, soit se trouver suspendue aux doublures d'ailes 7, comme on le voit sur la figure 3.

L'extrémité de la traverse supérieure 5' de la face avant 5, solidarisée à la doublure d'aile 7, passe en dessous de cette dernière et y est solidarisée par des rivets 8 fusibles, par exemple en matière plastique.

Si l'effort imprimé par la tête d'un piéton sur la traverse supérieure 5' est important, les rivets 8 cèdent et la traverse supérieure descend, ce qui permet l'absorption de l'énergie du choc par le capot.

Sur l'exemple de la figure 4, le jambage 6' de la face avant 5 comporte des fentes (non représentées) dans une région 9 autour d'un oeillet de fixation 10. Cet oeillet est destiné à recevoir une vis de fixation (non représentée) de la face avant technique sur la platine 1 du longeron.

En cas d'effort vertical imprimé à la face avant technique 5, au-delà d'un certain seuil, les fentes, qui créent une amorce de rupture, se propagent dans le jambage qui descend sur la vis.

Le seuil d'effort est fixé, par la configuration des fentes, entre 3000 et 4000 N, de façon que la face avant résiste aux sollicitations imposées à sa traverse supérieure dans les conditions normales d'utilisation du véhicule, mais descend en cas de choc tête ou hanche.

Pour fendre le jambage, on peut en outre prévoir un insert (non représenté) en forme de coin autour de l'oeillet de fixation 10.

Les exemples décrits ci-dessus ne présentent aucun caractère limitatif.

## Revendications

1. Ensemble d'une pièce (5) d'un avant de véhicule automobile et de moyens de fixation de la pièce (5) à un longeron (2), la pièce (5) ayant un bord supérieur (5') situé dans le voisinage d'une zone de la carrosserie susceptible de recevoir l'impact d'une tête ou d'une hanche d'un piéton, les moyens de fixation comprenant des moyens de reprise (3;8) par le longeron des efforts verticaux subis par la pièce (5), **caractérisé en ce que** la pièce (5) est une pièce de structure destinée à reprendre les efforts engendrés par un capot et par les vibrations du véhicule et **en ce que** ces moyens de reprise d'efforts sont effaçables, c'est-à-dire qu'ils sont aptes à adopter une première configuration dans laquelle des efforts verticaux subis par la pièce de structure (5) sont intégralement repris par le longeron (2) et une seconde configuration dans laquelle la reprise des efforts verticaux n'est plus assurée de sorte que la pièce de structure est libérée verticalement par rapport au longeron.

2. Ensemble selon la revendication 1, dans laquelle les moyens de reprise (3; 8) sont constitués par un doigt (3) monté sur chaque longeron (2), mobile sous l'action d'un actionneur entre une position sortie dans laquelle il retient la pièce (5) verticalement et une position rentrée dans laquelle il la libère.

3. Ensemble selon la revendication 2, dans laquelle l'actionneur est un moteur.

4. Ensemble selon l'une des revendications 2 et 3, dans laquelle l'actionneur est relié à un capteur d'impact, de préférence apte à différencier entre un contact avec un piéton et un contact avec un obstacle différent d'un piéton.

5. Ensemble selon la revendication 1, dans laquelle les moyens de reprise (3 ; 8) sont constitués par un doigt (3) fixe sécable à partir d'un seuil prédéterminé d'effort vertical subi par la pièce (5).

6. Ensemble selon la revendication 1, dans laquelle les moyens de reprise comprennent une portion fusible (9) de la pièce (5).

7. Ensemble selon la revendication 1, dans laquelle les moyens de reprise sont constitués par un insert noyé dans la pièce (5) et fixé au longeron, cet insert étant configuré pour fendre la pièce au-delà d'un seuil prédéterminé d'effort vertical subi par ladite pièce (5).

8. Ensemble selon l'une des revendications 1 à 7, dans laquelle la pièce (5) porte une serrure de capot électrique qui est commandée en ouverture par un capteur ayant détecté un contact avec un piéton.

9. Ensemble selon l'une des revendications 1 à 8, dans laquelle les extrémités de la pièce (5) se trouvent en dessous de doublures d'ailes (7) du véhicule et elles y sont solidarisées par des liaisons fusibles (8) par exemple des inserts surmoulés ou sertis.

10. Ensemble selon l'une des revendications 1 à 9, **caractérisée en ce que** la pièce (5) est une cassette de refroidissement.

11. Ensemble selon l'une des revendications 1 à 9 **caractérisée en ce que** la pièce (5) est une face avant technique (5).

## Claims

1. An assembly of a part (5) of the front of a motor vehicle and fixing means of the part (5) to a side rail (2), the structural part having a top edge (5') situated in the vicinity of a zone of the bodywork that might receive an impact from the head or the hip of a pedestrian, the fixing means comprising force-opposing means (3 ; 8) enabling the side rail to oppose the vertical forces to which the part (5) is subjected, **characterized in that** the part (5) is a structural part intended to oppose forces generated by a hood and vehicle vibration and **in that** the force-opposing means are collapsible, i.e. capable of occupying a first configuration in which the vertical forces to which the part (5) is subjected are fully opposed by the side rail (2) and a second configuration in which the vertical forces are not opposed anymore so that the structural part is vertically released in relation to the side rail.

2. An assembly according to claim 1, in which the force-opposing means (3;8) are constituted by a finger(3) mounted on each side rail(2) to move under drive from an actuator between an extended position in which the finger retains the part(5) vertically, and a retracted position in which the part is released.

3. An assembly according to claim 2, in which the actuator is a motor.

4. An assembly according to claim 2 and 3, in which the actuator is connected to an impact sensor, preferably a sensor suitable for distinguishing between contact with a pedestrian and contact with an obstacle other than a pedestrian.

5. An assembly according to claim 1, in which the force-opposing means(3;8) are constituted by a fixed finger that is breakable above a predetermined vertical force threshold to which the part (5) is subjected.

6. An assembly according to claim 1, in which the force-opposing means comprise a fusible portion(9) of the part(5).

7. An assembly according to claim 1, in which the force-opposing means are constituted by an insert embedded in the part (5) and fixed to the side rail, said insert being configured to split the part beyond a predetermined threshold of vertical force to which said part(5) is subjected.

8. An assembly according to any one of claims 1 to 7, in which the part(5) carries an electrical hood lock which is caused to open by a sensor that has detected contact with a pedestrian.

9. An assembly according to any one of claims 1 to 8, in which the ends of the part (5) lie under fender linings(7) of the vehicle and are secured thereto by fusible fasteners(8), e.g. overmolded or crimped inserts.

10. An assembly according to any one of claims 1 to 9, wherein the part (5) is a cooling unit.

11. An assembly according to any one claims 1 to 9, wherein the part (5) is an equipment front face (5).

## Patentansprüche

1. Anordnung eines Teils (5) eines Kraftfahrzeugvorderteils und Mittel zum Befestigen des Teils (5) an einem Längsträger (2), wobei das Teil (5) einen oberen Rand (5') aufweist, der sich nahe einem Bereich der Karosserie befindet, in dem der Aufprall eines Kopfes oder einer Hüfte eines Fußgängers erfolgen kann, und wobei die Mittel zum Befestigen Mittel zur Aufnahme (3) der senkrechten Kräfte auf das Teil (5) durch den Längsträger umfassen, **dadurch gekennzeichnet, dass** das Teil (5) ein zum Aufnehmen der von einer Haube und von den Vibrationen des Fahrzeugs erzeugten Kräfte bestimmtes Strukturteil ist und dass diese Mittel zur Aufnahme von Kräften außer Funktion gesetzt werden können, das heißt, sie sind in der Lage, eine erste Anordnung, in der die auf das Strukturteil (5) einwirkenden senkrechten Kräfte vollständig vom Längsträger (2) aufgenommen werden, und eine zweite Anordnung einzunehmen, in der die Aufnahme der senkrechten Kräfte nicht mehr gewährleistet ist, sodass das Strukturteil senkrecht zum Längsträger freigegeben ist.

2. Anordnung nach Anspruch 1, bei dem die Mittel zur Aufnahme (3, 8) aus einem auf jedem Längsträger (2) montierten Finger (3) bestehen, der unter Einwirkung eines Stellglieds zwischen einer Ausrückstellung, in der dieser das Teil (5) senkrecht arretiert, und einer Einrückstellung, in der er dieses freigibt, verstellbar ist.

3. Anordnung nach Anspruch 2, bei dem das Stellglied ein Motor ist.

4. Anordnung nach einem der Ansprüche 2 und 3, bei dem das Stellglied mit einem Aufprallsensor verbunden ist, der vorzugsweise zwischen einem Kontakt mit einem Fußgänger und einem Kontakt mit einem Hindernis unterscheiden kann, bei dem es sich nicht um einen Fußgänger handelt.

5. Anordnung nach Anspruch 1, bei dem die Mittel zur Aufnahme (3, 8) einen festen Finger (3) umfassen, der ab einer definierten Schwelle der auf das Teil (5) einwirkenden senkrechten Kraft teilbar ist.

6. Anordnung nach Anspruch 1, bei dem die Mittel zur Aufnahme einen als Sollbruchstelle dienenden Anteil (9) des Teils (5) umfassen.

7. Anordnung nach Anspruch 1, bei dem die Mittel zur Aufnahme aus einem im Teil (5) versenkten und am Längsträger befestigten Einsatz bestehen, wobei dieser Einsatz so konfiguriert ist, dass er das Teil oberhalb einer definierten Schwelle der auf das Teil (5) einwirkenden senkrechten Kraft spaltet.

8. Anordnung nach einem der Ansprüche 1 bis 7, bei dem das Teil (5) eine elektrische Haubenverriegelung trägt, die von einem Sensor, der einen Kontakt mit einem Fußgänger erkennt, zum Öffnen betätigt wird.

9. Anordnung nach einem der Ansprüche 1 bis 8, bei dem die Enden des Teils (5) unterhalb der Kotflügelinnenverkleidung (7) des Fahrzeugs angeordnet sind und diese dort durch als Sollbruchstelle ausgebildete Verbindungen (8) wie beispielsweise überformte oder gepresste Einsatze verbunden sind.

10. Anordnung nach einem der Ansprüche 1 bis 9, **dadurch gekennzeichnet, dass** es sich bei dem Teil (5) um eine Kühlkassette handelt.

11. Anordnung nach einem der Ansprüche 1 bis 9, **dadurch gekennzeichnet, dass** das Teil (5) ein technisches Vorderteil (5) ist.
